# EUROPÄISCHE PATENTSCHRIFT

(11) **EP 1 132 170 B1**
(45) Veröffentlichungstag und Bekanntmachung des Hinweises auf die Patenterteilung: **28.05.2008**
(21) Anmeldenummer: 01104990.5
(22) Anmeldetag: 01.03.2001
(51) Int. Cl.: B23Q 5/40, F16C 23/00

(54) **Lager für eine Gewindespindel, insbesondere einer Bearbeitungsmaschine und Verfahren zur Aufnahme einer Gewindespindel in einem solchen Lager**
Bearing for a thread screw,especially for a shaping machine and method for receiving of a thread screw in such a bearing
Palier pour une tige filetée,notamment pour une machine d'usinage et méthode pour introduire une tige filetée dans un tel palier

(30) Priorität: 07.03.2000 DE 10010901
(43) Veröffentlichungstag der Anmeldung: 12.09.2001
(73) Patentinhaber: Gebr. Heller Maschinenfabrik GmbH, D-72622 Nürtingen (DE)
(72) Erfinder: Kurz, Artur, 73240 Wendlingen (DE)
(74) Vertreter: Kohl, Karl-Heinz

(56) Entgegenhaltungen:
- GB-A- 1 276 547
- US-A- 3 627 388
- US-A- 3 957 319

## Beschreibung

Die Erfindung betrifft ein Lager für eine Gewindespindel, insbesondere einer Bearbeitungsmaschine, nach dem Oberbegriff des Anspruches 1 sowie ein Verfahren zur Aufnahme einer Gewindespindel in einem solchen Lager nach dem Oberbegriff des Anspruches 13.

Es sind Gewindespindeln bei Bearbeitungsmaschinen bekannt, die mit ihren Enden in Lagern aufgenommen sind und auf denen beispielsweise Schlitten verfahrbar sind, die mit wenigstens einer drehbar angetriebenen Gewindemutter auf der Gewindespindel sitzen. Bei längerem Betrieb der Maschine erwärmt sich die Gewindespindel, wodurch Längsdehnungen auftreten, die zu einer unzulässig hohen Belastung oder gar einer Beschädigung der Lager führen können.

Man hat daher Spindeln am einen Ende in einem Festlager und am anderen Ende in einem Loslager aufgenommen. Als weitere Maßnahmen sind mechanische (Federn) oder fluidische Vorspanneinrichtungen bekannt. Diese Lagerungsarten mindern jedoch sämtlich die Steifigkeit der Spindel, was die Vibrationsneigung fördert und zu Genauigkeitseinbußen führt. Außerdem sind diese Systeme kostenmäßig und baulich sehr aufwendig und mindern um den Betrag der Vorspannung die zulässige Betriebsbelastung von Spindeln und Lagern.

Es sind Verbindungseinheiten bekannt (GB-A-1 276 547), die zwei aufeinanderliegende Hülsen aufweisen, die zur Montage und Demontage auf einer zylindrischen Welle durch Druckbeaufschlagung gelöst werden können. Die aufeinanderliegenden Flächen sind konisch geformt. Die äußere Hülse ist mit einem Druckkanal versehen, in den Druckmedium eingeführt werden kann. Um die beiden Hülsen gegeneinander verschieben zu können, wird der Druckkanal mit Druck beaufschlagt. Um die beiden Hülsen drehfest miteinander zu verbinden, wird der Druckkanal druckentlastet. Bei dieser Verbindungseinrichtung ist es auch möglich, den Druckkanal in der inneren Hülse vorzusehen, auf die der Innenring eines Wälzlagers aufgesetzt wird.

Der Erfindung liegt die Aufgabe zugrunde, das gattungsgemäße Lager und das gattungsgemäße Verfahren so auszubilden, daß Beschädigungen aufgrund von Längsdehnungen der Gewindespindel zuverlässig vermieden werden und im Betrieb die physikalischen Verhältnisse einer beidseitig fest eingespannten Spindel vorliegen.

Diese Aufgabe wird beim gattungsgemäßen Lager erfindungsgemäß mit den kennzeichnenden Merkmalen des Anspruches 1 und beim gattungsgemäßen Verfahren erfindungsgemäß mit den kennzeichnenden Merkmalen des Anspruches 13 gelöst.

Beim erfindungsgemäßen Lager wird das Lagerteil der Gewindespindel durch die Klemmbuchse eingespannt. Sie wird durch elektromechanische oder fluidische Elemente so beaufschlagt, daß sie das Lagerteil und damit die Gewindespindel reibschlüssig in Achsrichtung hält. Das Druckmittel in der Klemmbuchse wird nach einer zeitlichen Sequenz oder nach Signal einer Meßeinrichtung für Längenänderung oder Spannungsänderung entlastet. Dadurch wird der Reibschluß zwischen der Klemmbuchse und dem Lagerteil der Gewindespindel aufgehoben. Die durch die Erwärmung hervorgerufene Dehnung der Gewindespindel kann sich dadurch ausgleichen. Sobald dieser Längenausgleich erfolgt ist, wird das Druckmittel der Klemmbuchse wieder unter Druck gesetzt, wodurch der in Achsrichtung wirkende hohe Reibschluß zwischen der Klemmbuchse und dem Lagerteil der Gewindespindel wieder hergestellt wird.

Beim erfindungsgemäßen Verfahren wird das Lagerteil der Gewindespindel in der Aufnahme festgeklemmt. Um zu hohe Belastungen des Lagers abzubauen, wird die Klemmung in bestimmten Zeitabständen oder bei Erreichen bestimmter Spannungen während einer unbelasteten Phase der Gewindespindel aufgehoben. Die durch die Erwärmung hervorgerufene Längenänderung kann sich dann durch Axialverschiebung der Gewindespindel ausgleichen. Nach dem Längenausgleich wird das Lagerteil der Gewindespindel wieder festgespannt.

Weitere Merkmale der Erfindung ergeben sich aus den weiteren Ansprüchen, der Beschreibung und der Zeichnung.

Die Erfindung wird anhand zweier in den Zeichnungen dargestellter Ausführungsbeispiele näher erläutert. Es zeigen
- Fig. 1: in schematischer Darstellung eine erste Ausführungsform eines erfindungsgemäßen Lagers für eine Gewindespindel,
- Fig. 2: in einer Darstellung entsprechend Fig. 1 eine zweite Ausführungsform eines erfindungsgemäßen Lagers.

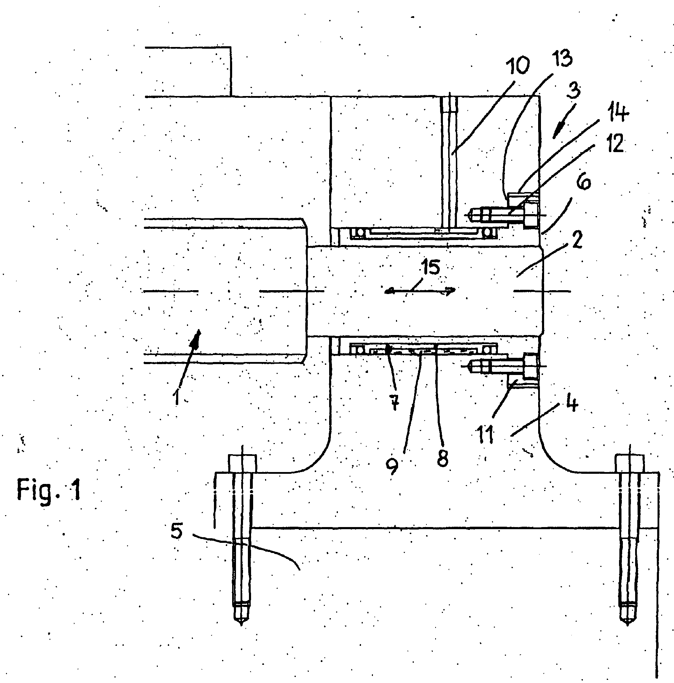

Die Gewindespindel 1 gemäß Fig. 1 ist im Ausführungsbeispiel an einer Bearbeitungsmaschine vorgesehen und hat einen verjüngten Endabschnitt 2, mit dem die Gewindespindel in einem Lager 3 aufgenommen ist. Vorteilhaft ist auch das andere, in der Zeichnung nicht dargestellte Ende der Gewindespindel 1 in einer aus dem Stand der Technik bekannten Lagerung abgestützt.

Die beiden Lager können jedoch auch baugleich ausgeführt werden. Es ergeben sich dann die Möglichkeiten, die Längenänderung teils durch das eine und teils durch das andere Lager auszugleichen und derart die Längenänderungen symmetrisch aufzuteilen.

Das Lager 3 hat ein Gehäuse 4, das beispielsweise auf einem Maschinentisch oder Maschinenständer 5 lösbar befestigt ist. Das Lagergehäuse 4 hat eine Aufnahmeöffnung 6, in der eine hydraulische Klemmbuchse 7 untergebracht ist. Sie hat eine radial elastisch verb formbare zylindrische Wand 8, die den Endabschnitt 2 der Gewindespindel umgibt und einen ringförmigen Hydraulikraum 9 radial nach innen begrenzt. Er ist an beiden Enden geschlossen und über eine Bohrung 10 mit einer (nicht dargestellten) Hydraulikquelle verbunden. Die Bohrung 10 durchsetzt das Lagergehäuse 4 radial und ist am radial äußeren Ende mit einem Anschluß für eine Druckmittelzuleitung versehen.

Die hydraulische Klemmbuchse 7 ist an sich bekannt und darum auch nur kurz beschrieben. Sie hat an einem Ende einen radial nach außen gerichteten Flansch 11, durch den Schrauben 12 oder dergleichen zur Befestigung der Klemmbuchse 7 im Lagergehäuse 4 geführt sind. Die Aufnahmeöffnung 6 des Lagergehäuses 4 ist an einem Ende zur Aufnahme des Klemmbuchsenflansches 11 erweitert ausgebildet. Der Flansch 11 der Aufnahmebuchse 7 liegt in der Einbaulage am Boden 13 des erweiterten Aufnahmeabschnittes 14 an. Die Klemmbuchse 7 liegt abgedichtet in der Aufnahmeöffnung 6. Vorteilhaft liegt der Flansch 11 der Klemmbuchse 7 versenkt im erweiterten Aufnahmeabschnitt 14. Die Köpfe der Befestigungsschrauben 12 sind ihrerseits vorteilhaft versenkt im Flansch 11 untergebracht. Die Klemmbuchse 7 kann leicht eingebaut und auch ausgewechselt werden.

Die Gewindespindel 1 wird mit ihren beiden Enden zunächst fest eingespannt. Auf der Gewindespindel 1 wird über wenigstens eine (nicht dargestellte) drehbar angetriebene Spindelmutter beispielsweise ein Schlitten der Maschine verfahren. Bei längerem Einsatz erwärmt sich die Gewindespindel 1. Die durch die Erwärmung hervorgerufene Dehnung der Gewindespindel 1 führt zu hohen Belastungen des Lagers 3. Um diese hohen Belastungen abzubauen, wird in bestimmten Zeitabständen oder bei Erreichen bestimmter Spannungen während einer unbelasteten Phase der Spindel im Funktionsablauf der Maschine der Hydraulikraum 9 entlastet, wodurch die Klemmung des Endabschnittes 2 der Gewindespindel 1 aufgehoben wird. Die durch die Erwärmung hervorgerufene Längenänderung kann sich durch Axialverschiebung der Gewindespindel 1 in Richtung des Doppelpfeiles 15 ausgleichen. Nach dem Längenausgleich wird die Klemmbuchse 7 wieder mit Hydraulikmedium beaufschlagt, so daß der Endabschnitt 2 fest eingespannt wird.

Das Auftreten von Längenänderungen der Gewindespindel 1 bzw. ihres Endabschnittes 2 kann durch feinfühlige Meßeinrichtungen erfaßt werden. Diese Meßeinrichtung gibt bei Überschreiten einer vorgegebenen Längenveränderung ein Signal an eine Steuerung, die dann den Hydraulikraum 9 der Klemmbuchse 7 zum Tank hin entlastet, so daß der Längenausgleich der Gewindespindel 1 durchgeführt werden kann. Anschließend wird das Hydraulikmedium durch die Steuerung wieder unter Druck gesetzt, so daß die Klemmbuchse 7 den Endabschnitt 2 der Gewindespindel 1 spannt.

Anstelle von Längenänderungen können auch Zug- oder Druckspannungsänderungen dieses Signal liefern.

Das in Fig. 1 nicht dargestellte andere Ende der Gewindespindel 1 ist in einem Festlager fixiert, das jede geeignete Ausbildung haben kann.

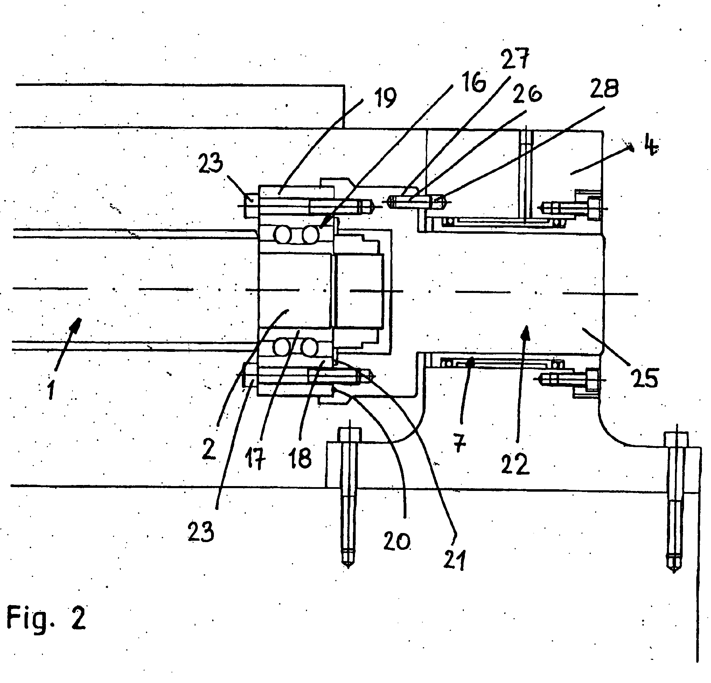

Fig. 2 zeigt eine Ausführung, bei der die Gewindespindel 1 im Unterschied zur vorigen Ausführungsform um ihre Achse drehbar ist. Um dies zu ermöglichen, ist zwischen der stationären Klemmbuchse 7 und der Gewindespindel 1 ein radial und axial wirkendes Lager 16, vorzugsweise ein Wälzlager, eingebaut. Der Endabschnitt 2 der Gewindespindel 1 trägt dabei drehfest einen Innenring 17 des Lagers 16, dessen Außenring 18 in einer Flanschbuchse 19 aufgenommen ist. Sie liegt an einem Boden 20 einer stirnseitigen Vertiefung 21 eines Flanschbolzens 22 an, mit dem sie durch Schrauben 23 verbunden ist. Die Vertiefung 21 ist an einem im Außendurchmesser vergrößerten Endabschnitt 24 des Flanschbolzens 22 vorgesehen. An den Endabschnitt 24 schließt ein zylindrischer, im Außendurchmesser kleinerer Lagerteil 25 an, der in der Klemmbuchse 7 gleitend oder festgeklemmt sitzt. Der Flanschbolzen 22 ist durch wenigstens eine Verdrehsicherung 26 gegen Verdrehen gesichert. Die Verdrehsicherung 26 ist im Ausführungsbeispiel ein Stift, der in fluchtende Sacklochöffnungen 27, 28 im Endabschnitt 24 des Flanschbolzens 22 und im Gehäuse 4 ragt. Der Endabschnitt 24 hat einen solchen Axialabstand vom Lagergehäuse 4 und die Sacklochöffnung 28 im Gehäuse ist so tief, daß die Gewindespindel 1 zusammen mit dem Lager 16 den Längenausgleich ausführen kann, wenn die Klemmbuchse 7 in der beschriebenen Weise entlastet wird.

Die beschriebenen von Fest- auf Loslager umschaltbaren Lager 3 ermöglichen eine einfache, insbesondere kostengünstige Möglichkeit, im Betrieb der Gewindespindel 1 auftretende Längenänderungen zuverlässig abzubauen, so daß Beschädigungen des Lagers 3 und/oder der Gewindespindel 1 zuverlässig vermieden werden und im Betrieb der Maschine die physikalisch vorteilhaften Verhältnisse einer fest eingespannten Spindel vorliegen.

## Patentansprüche

1. Lager für eine Gewindespindel (1), insbesondere einer Bearbeitungsmaschine, mit einem Gehäuse (4), das wenigstens eine Aufnahme aufweist, die ein Lagerteil (2. 22) der Gewindespindel (1) aufnimmt,
**dadurch gekennzeichnet, daß** die Aufnahme für das Lagerteil (2, 22) der Gewindespindel (1) eine Klemmbuchse (7) ist, die zum Festklemmen des Lagerteiles (2, 22) der Gewindespindel (1) durch elektromechanische oder fluidische Elemente beaufschlagbar ist, wobei in bestimmten Zeitabständen oder bei Erreichen einer bestimmten Spannung die, Klemmung durch Entlastung der Klemmbuchse (7) aufhebbar ist.
Hieran schließen die ursprünglichen Ansprüche 2 bis 12 an.

2. Lager nach Anspruch 1,
**dadurch gekennzeichnet, daß** die Klemmbuchse (7) in eine Öffnung (6) des Gehäuses (4) des Lagers (3) vorzugsweise lösbar eingesetzt ist.

3. Lager nach Anspruch 1 oder 2, **dadurch gekennzeichnet, daß** die Klemmbuchse (7) eine durch ein Druckmedium elastisch verformbare Wand (8) aufweist, die vorteilhaft einen Ringraum (9) begrenzt, in dem sich das Druckmedium befindet.

4. Lager nach Anspruch 3,
**dadurch gekennzeichnet, daß** die Wand (8) unter der Kraft des Druckmediums am Lagerteil (2, 22) der Gewindespindel (1) anliegt.

5. Lager nach Anspruch 3 oder 4,
**dadurch gekennzeichnet, daß** in den Ringraum (9) wenigstens eine das Gehäuse vorzugsweise durchsetzende Bohrung (10) mündet, über die das Druckmedium mit einer Druckquelle verbunden ist.

6. Lager nach einem der Ansprüche 1 bis 5,
**dadurch gekennzeichnet, daß** das Druckmedium im Ringraum (9) gesteuert unter Druck setzbar und entlastbar ist.

7. Lager nach einem der Ansprüche 1 bis 6,
**dadurch gekennzeichnet, daß** eine Meßeinrichtung Längenänderungen der Gewindespindel (1) aufgrund von Temperaturänderungen erfaßt und vorteilhaft bei Überschreiten einer vorgegebenen Längendehnung der Gewindespindel (1) ein Signal an eine Steuerung sendet, die das Druckmedium im Ringraum (9) der Klemmbuchse (7) entlastet.

8. Lager nach einem der Ansprüche 1 bis 7,
**dadurch gekennzeichnet, daß** im Kraftfluß zwischen der Klemmbuchse (7) und der Gewindespindel (1) ein radial und axial wirkendes Lager (16), vorzugsweise ein Wälzlager, eingesetzt ist.

9. Lager nach einem der Ansprüche 1 bis 8,
**dadurch gekennzeichnet, daß** das Lagerteil (2) das eine Ende der Gewindespindel (1) ist.

10. Lager nach Anspruch 8,
**dadurch gekennzeichnet, daß** das Lagerteil (22) ein Flanschbolzen ist, der mit dem zwischengeschalteten Lager (16) verbunden ist.

11. Lager nach Anspruch 10,
**dadurch gekennzeichnet, daß** das Lagerteil (22) mit einer das zwischengeschaltete Lager (16) aufnehmenden Führungsbuchse (19) drehfest verbunden ist.

12. Lager nach Anspruch 8, 10 oder 11,
**dadurch gekennzeichnet, daß** das Lagerteil (22) drehfest, aber axial verschiebbar mit dem Gehäuse (4) des Lagers verbunden ist.

13. Verfahren zur Ausnahme einer Gewindespindel (1) in einem Lager (3) nach einem der Ansprüche 1 bis 12, bei dem ein Lagerteil (2, 22) der Gewindespindel (1) in einer Aufnahme eines Lagergehäuses (4) aufgenommen wird,
**dadurch gekennzeichnet, daß** der Lagerteil (2, 22) der Gewindespindel (1) in der Aufnahme festgeklemmt wird, und daß zum Abbau von zu hohen Belastungen des Lagers (3) in bestimmten Zeitabständen oder bei Erreichen bestimmter Spannungen die Klemmung während einer unbelasteten Phase der Gewindespindel (1) aufgehoben wird.

## Claims

1. Bearing for a thread screw (1), especially for a shaping machine, with a housing (4), comprising at least one receiving, accommodating a bearing part (2, 22) of the thread screw (1),
**characterised in that** the receiving for the bearing part (2, 22) of the thread screw (1) is a clamping bush (7), chargeable for the locking of the bearing part (2, 22) of the thread screw (1) by electromechanical or fluidic elements, whereby the clamping can be neutralised at certain time intervals or by realising of a certain stress by means of unloading of the clamping bushe (7).

2. Bearing according to claim 1,
**characterised in that** the clamping bush (7) is inserted, preferably detachably, into an opening (6) of the housing (4) of the bearing (3).

3. Bearing according to claim 1 or 2,
**characterised in that** the clamping bush (7) comprises a wall (8), elastically deformable by a pressure medium and advantageously delimiting an annular space (9), in which is located the pressure medium.

4. Bearing according to claim 3,
**characterised in that** the wall (8) contacts the bearing part (2, 22) of the thread screw (1) under the force of the pressure medium.

5. Bearing according to claim 3 or 4,
**characterised in that** into the annular space (9) runs at least one bore (10), preferably penetrating the housing, the bore (10) connecting the pressure medium with a source of the pressure.

6. Bearing according to one of the claims 1 to 5,
**characterised in that** the pressure medium within the annular space (9) can under control be put under pressure and relieved.

7. Bearing according to one of the claims 1 to 6,
**characterised in that** a measuring device detects elongations of the thread screw (1) on the basis of changes in temperature and advantageously transmits a signal to the command in the case of transgression of a predetermined linear extension of the thread screw (1), the command relieving the pressure medium within the annular space (9) of the clamping bush (7).

8. Bearing according to one of the claims 1 to 7,
**characterised in that** in the power flow between the clamping bush (7) and the thread screw (1) is implanted a bearing (16), acting radially and axially, preferably a rolling bearing.

9. Bearing according to one of the claims 1 to 8,
**characterised in that** the bearing part (2) is one end of the thread screw (1).

10. Bearing according to claim 8,
**characterised in that** the bearing part (22) is a flanged bolt, connected with the interposed bearing (16).

11. Bearing according to claim 10,
**characterised in that** the bearing part (22) is torque proof connected to a guiding bush (19) receiving the interposed bearing (16).

12. Bearing according to claim 8, 10 or 11,
**characterised in that** the bearing part (22) is torque proof, but axially displaceable with the housing (4) of the bearing.

13. Method for the receiving of a thread screw (1) in a bearing (3) according to one of the claims 1 to 12, whereby a bearing part (2, 22) of the thread screw (1) is accommodated within a seating of a bearing housing (4),
**characterised in that** the bearing part (2, 22) of the thread screw (1) is locked within the seating and that for the reduction of loads for the bearing (3) too high at certain time intervals or when certain stresses are reached, the clamping can be neutralized during an unloaded phase of the thread screw (1).

## Revendications

1. Palier pour une tige filetée (1), notamment pour une machine d'usinage avec un boîtier (4) comprenant au moins une réception acceptant un organe de palier (2, 22) de la tige filetée (1),
**caractérisé en ce que** la réception pour l'organe de palier (2, 22) de la tige filetée (1) est une douille de serrage (7) alimentable par des éléments électromécaniques ou fluidiques pour le blocage de l'organe de palier (2, 22), le blocage pouvant être désactivé par décharge de la douille de serrage (7) à intervalles précis ou après atteinte d'un serrage précis.

2. Palier selon revendication 1,
**caractérisé en ce que** la douille de serrage (7) est posée de préférence de façon démontable dans une ouverture (6) du boîtier (4) du palier (3).

3. Palier selon revendication 1 ou 2,
**caractérisé en ce que** la douille de serrage (7) comprend une paroi (8) élastiquement déformable par un médium de pression, la paroi (8) limitant avantageusement un espace annulaire (9) dans lequel se trouve le médium de pression.

4. Palier selon revendication 3,
**caractérisé en ce que** la paroi (8) s'appuie sur l'organe de palier (2, 22) de la tige filetée (1) sous la force du médium de pression.

5. Palier selon revendication 3 ou 4,
**caractérisé en ce que** dans l'espace annulaire (9) débouche au moins un perçage (10), pénétrant de préférence dans le boîtier et sur lequel le médium de pression est connecté à une source de pression.

6. Palier selon une des revendications 1 à 5,
**caractérisé en ce que** le médium de pression dans l'espace annulaire (9) peut être soumis à la pression ou déchargé selon commande.

7. Palier selon une des revendications 1 à 6,
**caractérisé en ce qu'** un équipement de mesurage enregistre les déformations linéaires de la tige filetée (1) en raison des variations de température et transmet avantageusement un signal en cas d' outrepassement d' une dilatation en longueur prédéfinie de la tige filetée (1) à une commande qui décharge le médium de pression dans l'espace annulaire (9) de la douille de serrage (7).

8. Palier selon une des revendications 1 à 7,
**caractérisé en ce que** dans le flux de force entre la douille de serrage (7) et la tige filetée (1) est implantée un palier (16) agissant radialement et axialement, de préférence un palier à roulement.

9. Palier selon une des revendications 1 à 8,
**caractérisé en ce que** l'organe de palier (2) est l'une des extrémités de la tige filetée (1).

10. Palier selon revendication 8,
**caractérisé en ce que** l'organe de palier (22) est un boulon à bride, connecté avec un palier (16) intercalé.

11. Palier selon revendication 10,
**caractérisé en ce que** l'organe de palier (22) est connecté avec une boîte de guidage (19) recevant le palier (16) intercalé, ceux-ci étant reliés de façon fixe en rotation.

12. Palier selon revendication 8, 10 ou 11,
**caractérisé en ce que** l'organe de palier (22) est connecté avec le boîtier (4) du palier de façon fixe en rotation mais axialement coulissante.

13. Méthode pour introduire une tige filetée (1) dans un palier (3) selon une des revendications 1 à 12, selon laquelle un organe de palier (2, 22) de la tige filetée (1) est introduit dans une réception du boîtier (4) de palier,
**caractérisée en ce que** l'organe de palier (2, 22) de la tige filetée (1) est serré à bloc dans la réception et que, pour la réduction des charges trop hautes du palier (3) à intervalles précis ou à l'atteinte de tensions précises, le serrage est annulé durant une phase de déchargement de la tige filetée (1).
